# EUROPÄISCHE PATENTSCHRIFT

(11) **EP 2 400 169 B1**
(45) Veröffentlichungstag und Bekanntmachung des Hinweises auf die Patenterteilung: **15.10.2014**
(21) Anmeldenummer: 11003957.5
(22) Anmeldetag: 13.05.2011
(51) Int. Cl.: F16B 39/282

(54) **Verbindungsvorrichtung**
Connecting device
Dispositif de connexion

(30) Priorität: 25.06.2010 DE 102010025143
(43) Veröffentlichungstag der Anmeldung: 28.12.2011
(73) Patentinhaber: NEDSCHROEF PLETTENBERG GmbH, 58840 Plettenberg (DE)
(72) Erfinder: Ferreau, Oliver, 44799 Bochum (DE)
(74) Vertreter: Dörner, Kötter & Kollegen

(56) Entgegenhaltungen:
- DE-C- 423 107
- GB-A- 556 387
- US-A- 1 418 050

## Beschreibung

Die Erfindung betrifft eine Verbindungsvorrichtung nach dem Oberbegriff des Patentanspruchs 1. Die Erfindung betrifft darüber hinaus ein Verfahren zur Herstellung einer Verbindung nach dem Patentanspruch 12.

Verbindungsvorrichtungen, bestehend aus einem Gewindebolzen sowie einer auf dieser aufschraubbaren Mutter werden im Bereich der lösbaren Verbindungen in vielfältiger Weise eingesetzt. Um beispielsweise Kugellager und Bremsscheibe an der Vorderachse eines Kraftfahrzeugs zu verschrauben wird in der Regel eine Mutter eingesetzt, die als zentrale Verschraubung auf den Gewindebolzen der Achse aufgeschraubt wird. Diese Schraubverbindung darf unter Betriebsbedingungen auf keinen Fall vollständig an Vorspannkraft verlieren, da es ansonsten zu Beschädigungen der Achse, der Lager oder sonstiger befestigter Bauteile und als Folge davon zu Unfällen kommen kann. Problematisch hierbei ist, dass es unter ungünstigen Bedingungen beispielsweise vorkommen kann, dass beim Rückwärtsfahren ein Ruck beim Anfahren in Löserichtung der Mutter in die Verbindung eingeht, der so stark ist, dass sich die Mutter löst und somit ein völliger Vorspannkraftverlust eintreten kann.

Es ist bekannt, einem Lösen der Schraubverbindung durch eine starke Erhöhung der Abschraubmomente entgegenzuwirken. Derartige Lösungsansätze wirken allerdings rein kraftschlüssig und können daher ein Lösen unter ungünstigen Bedingungen nicht vollständig ausschließen.

Hier will die Erfindung Abhilfe schaffen. Der Erfindung liegt die Aufgabe zu Grunde, eine Verbindungsvorrichtung mit einem Gewindebolzen und einer auf das Gewinde dieses Bolzens aufschraubbaren Mutter zu schaffen, welche ein Lösen der Schraubverbindung auch unter ungünstigsten Bedingungen verhindert. Gemäß der Erfindung wird diese Aufgabe durch die Merkmale des kennzeichnenden Teils des Patentanspruchs 1 gelöst.

Mit der Erfindung ist eine Verbindungsvorrichtung mit einem Gewindebolzen und einer auf das Gewinde dieses Bolzens aufschraubbaren Mutter geschaffen, bei der ein Lösen der Schraubverbindung auch bei ungünstigen Bedingungen verhindert ist. Die Scheibe wird beim Aufschrauben der Mutter auf den Gewindebolzen über die Innenverzahnung, welche in die Bolzenverzahnung eingreift, drehfest gehalten, wobei die Mutter mit dem an dieser angeordneten Bördelkragen relativ zur Scheibe rotiert. Dabei sind die Außenverzahnung der Scheibe und die Kragenverzahnung des Bördelkragens derart ausgebildet, dass bei Änderung der Drehrichtung der Mutter ein Eingriff der beiden Verzahnungen bewirkt wird, wodurch die Mutter gesperrt wird (Ratscheneffekt). Ein Lösen der Schraube wird durch den Formschluss zwischen Kragenverzahnung und Außenverzahnung der Scheibe sowie Innenverzahnung der Scheibe und Bolzenverzahnung des Gewindebolzens wirksam verhindert. Hierbei ist es durchaus beabsichtigt, dass beim Abschrauben der Mutter vom Gewindebolzen diese zerstört wird, damit im Reparaturfall aus Sicherheitsgründen zwingend eine neue Mutter verwendet wird. Um dies zu gewährleisten, kann die Scheibe aus unterschiedlichen Materialien, wie beispielsweise Metall oder auch Kunststoff hergestellt sein.

Vorteilhaft ist die Bolzenverzahnung durch umlaufend angeordnete Stege gebildet, welche bevorzugt auf ihrer dem Gewinde abgewandten Seite mit einer Einpassschräge versehen sind. Hierdurch ist ein Eingleiten der Innenverzahnung der Scheibe in die Bolzenverzahnung des Gewindebolzens begünstigt.

In Weiterbildung der Erfindung ist das Verzahnungsprofil der Außenverzahnung der Scheibe sägezahnförmig ausgebildet. Hierdurch ist eine ungehemmte Drehung der Schraube in Anzugsrichtung gefördert. Ein besonders guter Ratscheneffekt wird erzielt, wenn auch das Verzahnungsprofil der Kragenverzahnung sägezahnförmig ausgebildet ist.

In weiterer Ausgestaltung der Erfindung weist die Kragenverzahnung des Bördelkragens und / oder die Außenverzahnung der Scheibe wenigstens eine ungleichmäßige Anordnung von Zähnen auf. Hierdurch wird bewirkt, dass auch bei kleinsten Verdrehungen entgegen der Anzugsrichtung der Mutter immer mindestens ein Zahn gegen ein Lösen der Mutter sperrt. Darüber hinaus können die Kragenverzahnung des Bördelkragens und/oder die Außenverzahnung der Scheibe unterschiedliche Steigungswinkel aufweisen, wodurch die zu übertragende Kraft steuerbar ist.

In Weiterbildung der Erfindung ist der Bördelkragen derart mit der Mutter verbunden, dass bei Einwirken eines Drehmoments größer 150kN, vorzugsweise größer 200kN auf den Bördelkragen ein Lösen des Bördelkragens von der Mutter eintritt. Hierdurch ist eine gezielte Zerstörung der Mutter durch Aufbringen einer definierten Lösekraft bewirkt.

In weiterer Ausgestaltung der Erfindung ist die Kragenverzahnung des Bördelkragens und / oder die Außenverzahnung der Scheibe derart ausgebildet, dass bei Einwirkung eines Drehmoments größer 150kN, vorzugsweise größer 200kN eine Beschädigung der Verzahnung eintritt, wodurch die Sperrwirkung der Verzahnung aufgehoben ist. Hierdurch ist ein Lösen der Mutter bei Überschreiten eines definierten Drehmoments unter Beschädigung der Mutter ermöglicht. Eine Wiederverwendung der Mutter, welche mit Sicherheitsrisiken verbunden wäre, ist wirksam verhindert.

In einer weiteren Ausgestaltung der Erfindung ist die Innenverzahnung der Scheibe derart ausgebildet, dass bei Einwirkung eines Drehmoments größer 150kN, vorzugsweise größer 200kN eine Beschädigung der Innenverzahnung der Scheibe eintritt, wodurch die Sperrwirkung der Verzahnung aufgehoben ist. Dabei ist die Verzahnung des Gewindebolzens bevorzugt derart ausgebildet, dass bei Anliegen eines Drehmoments größer 150kN, vorzugsweise größer 200kN an der Scheibe auch bei Beschädigung der Innenverzahnung der Scheibe keine Beschädigung der Bolzenverzahnung eintritt. Dieses kann zum Beispiel dadurch erzielt werden, dass die Stege der Bolzenverzahnung oberflächengehärtet ausgeführt sind.

In Ausgestaltung der Erfindung ist die Außenverzahnung und / oder die Innenverzahnung der Scheibe zumindest teilweise aus zur Scheibenebene abgewinkelten Zähnen gebildet. Je nach gewähltem Grenzwert des geforderten Abschraub-Drehmoments der Mutter ist so eine definierte Beschädigung der Zähne bewirkt, wodurch die Sperrwirkung der Mutter aufgehoben ist.

Gegenstand der Erfindung ist weiterhin ein Verfahren zur Herstellung einer Verbindung mit den Merkmalen des Patentanspruchs 12. Durch den Bördelkragen wird die Scheibe unverlierbar an der Mutter gehalten. Dabei wird die Scheibe über ihre Innenverzahnung formschlüssig mit der Bolzenverzahnung des Gewindebolzens verbunden. Die Außenverzahnung der Scheibe sowie die Kragenverzahnung des Bördelkragens werden derart ausgebildet, dass bei Drehung der Schraube und somit des Bördelkragens in Löserichtung die Kragenverzahnung in die Innenverzahnung der Scheibe eingreift und damit die Mutter sperrt. In Anzugsrichtung der Schraube ist die Drehung der Scheibe relativ zum Bördelkragen möglich.

In Weiterbildung der Erfindung wird die Kragenverzahnung und / oder die Außenverzahnung der Scheibe derart ausgebildet, dass bei Anliegen eines definierten Drehmoments zwischen Scheibe und Bördelkragen eine Beschädigung von Kragenverzahnung und / oder Außenverzahnung eintritt, wodurch die Sperrwirkung der Verzahnung aufgehoben wird, wobei die Einstellung des gewünschten Drehmoments durch Modifikation der Höhe der Zahnflanken und / oder der Dicke der Scheibe erfolgt. Durch die Modifikation von Zahnflankenhöhe bzw. Scheibendicke kann die Belastbarkeit der Scheibe hinsichtlich eines anliegenden Drehmoments an das jeweilige Einsatzfeld der Verbindung angepasst werden.

In Ausgestaltung der Erfindung weist die Kragenverzahnung des Bördelkragens und / oder die Außenverzahnung der Scheibe wenigstens eine ungleichmäßige Anordnung von Zähnen auf, so dass auch bei kleinsten Drehungen der Scheibe relativ zum Bördelkragen ein Sperren von Zähnen der gegenüberliegenden Verzahnungen einsetzt. Hierdurch ist sichergestellt, dass auch bei kleinsten Verdrehungen entgegen der Anzugsrichtung der Mutter immer mindestens ein Zahn gegen ein Lösen der Mutter sperrt. Darüber hinaus können die Kragenverzahnung des Bördelkragens und/oder die Außenverzahnung der Scheibe unterschiedliche Steigungswinkel aufweisen, wodurch die zu übertragende Kraft steuerbar ist.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

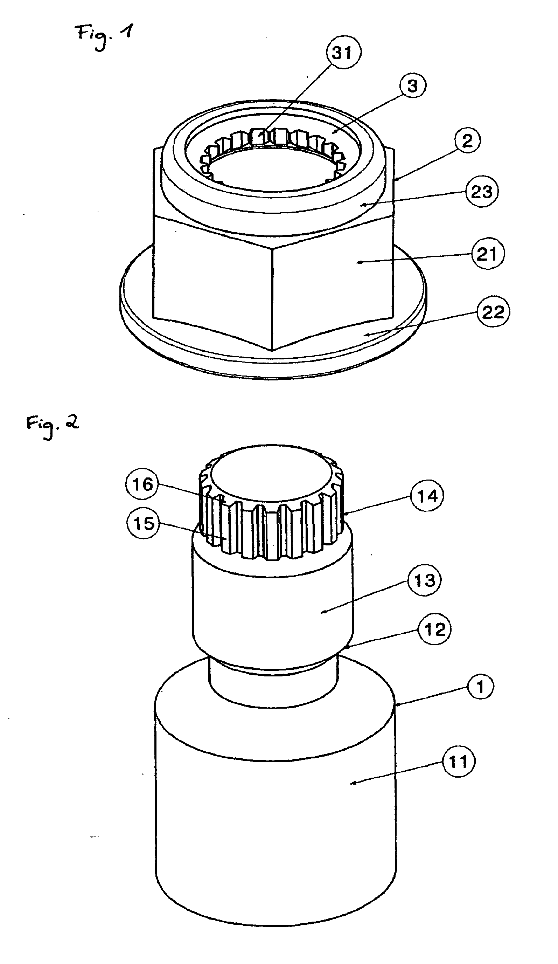

- Fig. 1: die räumliche Darstellung einer Mutter einer erfindungsgemäßen Verbindungsvorrichtung;
- Fig. 2: die räumliche Darstellung eines Gewindebolzens einer erfindungsgemäßen Verbindungsvorrichtung;

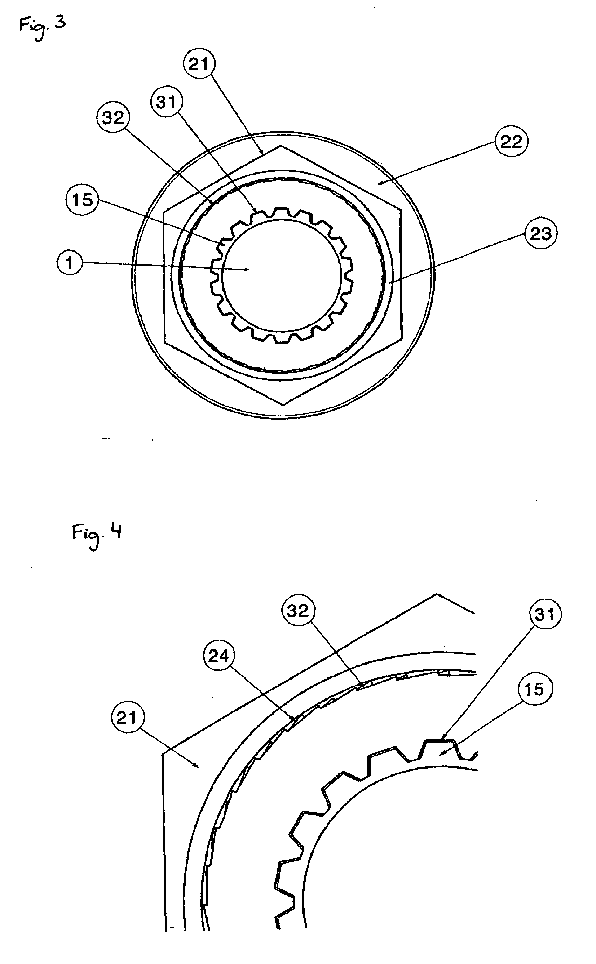

- Fig. 3: die Darstellung der Mutter aus Fig. 1, montiert auf dem Gewindebolzen aus Fig. 2, in der Draufsicht;
- Fig. 4: die Darstellung einer Ausschnittsvergrößerung der Verbindungsvorrichtung aus Fig. 3;

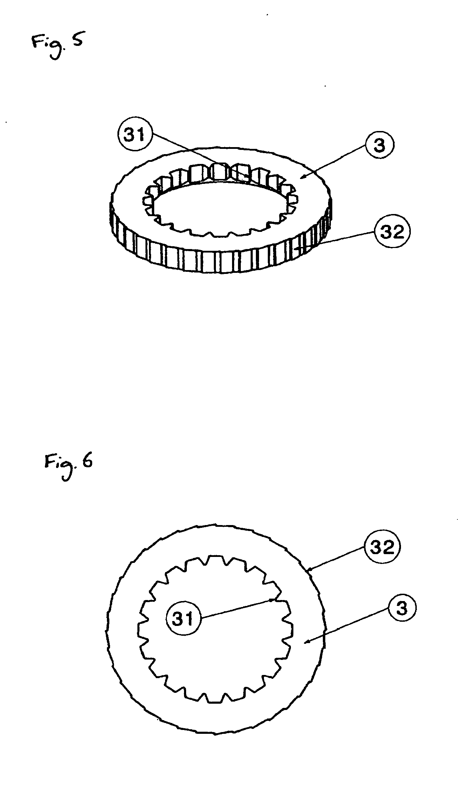

- Fig. 5: die räumliche Darstellung der Scheibe der Mutter aus Fig. 1 und
- Fig. 6: die Darstellung der Scheibe aus Fig. 5 in der Draufsicht.

Die als Ausführungsbeispiel gewählte Verbindungsvorrichtung besteht im Wesentlichen aus einem Gewindebolzen 1, auf den eine Mutter 2 aufschraubbar ist, die eine Scheibe 3 aufnimmt.

Der Gewindebolzen besteht im Ausführungsbeispiel aus einem zylindrischen Bolzenteil 11, an das ein Gewindestück 12 angeformt ist, in das ein Gewinde 13 eingebracht ist, an das sich eine Bolzenverzahnung 14 anschließt. Die Bolzenverzahnung 14 ist gebildet aus regelmäßig umlaufend angeordneten Stegen 15, welche im Ausführungsbeispiel oberflächengehärtet ausgeführt sind. Die Stege 15 sind an ihrem dem Gewinde 13 abgewandten Ende mit einer Einpassschräge 16 versehen und sind zueinander derart ausgebildet, dass zwischen jeweils zwei Stegen 15 ein Zwischenraum mit dreieckförmigem Querschnitt gebildet ist.

Die Mutter 2 besteht im Ausführungsbeispiel aus einem Sechskant-Mutternkörper 21, an den bodenseitig ein Flanschteil 22 angeformt ist. An ihrer dem Flanschteil 22 entgegengesetzten Seite ist an den Mutternkörper 21 ein Bördelkragen 23 angeformt, der an seiner Innenwandung mit einer Kragenverzahnung 24 versehen ist. Die Kragenverzahnung 24 weist im Ausführungsbeispiel ein Sägezahnprofil auf. Der Bördelkragen 23 nimmt eine Scheibe 3 auf, die über den Bördelkragen 23 unverlierbar mit der Mutter 2 verbunden ist.

Die Scheibe 3 ist ringförmig ausgebildet. Der Innendurchmesser der Scheibe 3 entspricht dabei im Wesentlichen dem Kerndurchmesser der Bolzenverzahnung 14 des Gewindebolzens 1. In den Innendurchmesser der Scheibe 3 ist eine Innenverzahnung 31 eingebracht, welche mit der Bolzenverzahnung 14 des Gewindebolzens 1 korrespondiert. Außen ist umlaufend in die Scheibe 3 eine Außenverzahnung 32 eingebracht, welche im Ausführungsbeispiel ein Sägezahnprofil aufweist, welches mit dem Sägezahnprofil der Kragenverzahnung 24 des Bördelkragens 23 der Mutter 2 korrespondiert. Die Kragenverzahnung 24 des Bördelkragens 23 und die Außenverzahnung 32 der Scheibe 3 sind derart ausgebildet, dass eine Drehung des Bördelkragens 23 relativ zur Scheibe 3 in Anziehrichtung der Mutter 2 ermöglicht ist. In Löserichtung der Mutter greift die Kragenverzahnung 24 des Bördelkragens 23 in die Außenverzahnung 32 der Scheibe 3 ein, so dass ein Formschluss zwischen Bördelkragen 23 und Scheibe 3 erzielt ist, wodurch eine Sperrwirkung hervorgerufen ist. Die Scheibe 3 kann sowohl aus Vollmaterialscheibe als auch als Blechstanzbiegeteil ausgeführt sein; wesentlich ist die Anordnung einer Außenverzahnung im Bereich des Außendurchmessers der Scheibe, welche beispielsweise auch durch ausgestellte Blechstreifen oder -zacken gebildet sein kann.

Zur Herstellung einer erfindungsgemäßen Verbindung wird die Scheibe 3 in dem Bördelkragen 23 durch Umbördeln verliersicher an der Mutter 2 fixiert. Die Mutter 2 mit integrierter Scheibe 3 wird auf dem Gewindebolzen 1 aufgeschraubt, wobei die Innenverzahnung 31 der Scheibe 3 in die Bolzenverzahnung 14 des Gewindebolzens 1 eingreift und mit diesem formschlüssig verbunden ist. Beim Anziehen der Mutter gleiten die Zähne der Kragenverzahnung 24 des Bördelkragens 23 entlang der Zähne der Außenverzahnung 33 der Scheibe 3, wobei ein Ratscheneffekt erzielt ist. Ein Lösen der Verbindung ist nur unter Zerstörung der Schraube 2 ermöglicht. Im Ausführungsbeispiel ist der Bördelkragen 23 derart mit dem Mutternkörper 11 verbunden, dass bei einem an dem Bördelkragen anliegenden Drehmoment von mehr als 200kN eine Abscherung der des Bördelkragens 23 von dem Mutternkörper 11 erfolgt, wodurch die Sperrwirkung der Mutter 2 aufgehoben wird. Der Bördelkragen 23 mit innenliegender Scheibe 3 wird beim anschließenden Lösen des Mutternkörpers 21 vom Gewindebolzen 1 aus der Bolzenverzahnung 4 herausgeschoben.

## Patentansprüche

1. Verbindungsvorrichtung, umfassend einen Gewindebolzen mit einem Gewinde und eine auf das Gewinde aufschraubbare Mutter, wobei die Mutter einen Bördelkragen aufweist, der eine Scheibe aufnimmt, **dadurch gekennzeichnet, dass** der Gewindebolzen (1) an seinem freien Ende dem Gewinde (13) vorgelagert eine Bolzenverzahnung (14) aufweist, in die eine an dem Innendurchmesser der Scheibe (3) angeordnete Innenverzahnung (31) eingreift und dass die Scheibe (3) an ihrem Außendurchmesser eine Außenverzahnung (32) aufweist, die in eine an der Innenwandung des Bördelkragens (23) angeordnete Kragenverzahnung (24) eingreift, wobei die Außenverzahnung (32) der Scheibe (3) mit der Kragenverzahnung (24) des Bördelkragens (23) derart zusammenwirkt, dass eine Drehung des Bördelkragens (23) relativ zur Scheibe (3) nur in Anzugsrichtung der Mutter (2) ermöglicht ist.

2. Vorrichtung nach Anspruch 1, **dadurch gekennzeichnet, dass** die Bolzenverzahnung (14) durch umlaufend angeordnete Stege (15) gebildet ist.

3. Vorrichtung nach Anspruch 2, **dadurch gekennzeichnet, dass** die Stege (15) auf ihrer dem Gewinde (13) abgewandten Seite mit einer Einpassschräge (16) versehen sind.

4. Vorrichtung nach einem der vorgenannten Ansprüche, **dadurch gekennzeichnet, dass** das Verzahnungsprofil der Außenverzahnung (32) der Scheibe (3) sägezahnförmig ausgebildet ist.

5. Vorrichtung nach einem der vorgenanten Ansprüche, **dadurch gekennzeichnet, dass** das Verzahnungsprofil der Kragenverzahnung (24) sägezahnförmig ausgebildet ist.

6. Vorrichtung nach einem der vorgenannten Ansprüche, **dadurch gekennzeichnet, dass** die Kragenverzahnung (24) des Bördelkragens (23) und/oder die Au ßenverzahnung (32) der Scheibe (3) derart ausgebildet ist, dass bei Einwirkung eines Drehmoments größer 150 kN, vorzugsweise größer 200 kN eine Beschädigung der Verzahnung (24, 32) eintritt, wodurch die Sperrwirkung der Verzahnung (24,32) aufgehoben ist.

7. Vorrichtung nach einem der vorgenannten Ansprüche, **dadurch gekennzeichnet, dass** der Bördelkragen (23) derart mit der Mutter (2) verbunden ist, dass bei Einwirkung eines Drehmoments größer 150 kN, vorzugsweise größer 200 kN auf den Bördelkragen (23) ein Lösen des Bördelkragens (23) von der Mutter (2) eintritt.

8. Vorrichtung nach einem der vorgenannten Ansprüche, **dadurch gekennzeichnet, dass** die Kragenverzahnung (24) des Bördelkragens (23) und/oder die Außenverzahnung (32) der Scheibe (3) wenigstens eine Anordnung von Zähnen mit unterschiedlichen Steigungswinkeln aufweist.

9. Vorrichtung nach einem der vorgenannten Ansprüche, **dadurch gekennzeichnet, dass** die Innenverzahnung (31) der Scheibe (3) derart ausgebildet ist, dass bei Einwirkung eines Drehmoments größer 150 kN, vorzugsweise größer 200 kN eine Beschädigung der Verzahnung (31) eintritt, wodurch die Sperrwirkung der Verzahnung aufgehoben ist.

10. Vorrichtung nach Anspruch 9, **dadurch gekennzeichnet, dass** die Bolzenverzahnung (14) des Gewindebolzens (1) derart ausgebildet ist, dass bei Anliegen eines Drehmoments größer 150 kN, vorzugsweise größer 200 kN an der Scheibe (3) auch bei Beschädigung der Innenverzahnung (31) der Scheibe (3) keine Beschädigung der Bolzenverzahnung (14) eintritt.

11. Vorrichtung nach einem der vorgenannten Ansprüche, **dadurch gekennzeichnet, dass** die Außenverzahnung (32) und/oder die Innenverzahnung (31) der Scheibe (3) zumindest teilweise aus zur Scheibenebene abgewinkelten Zähnen gebildet ist.

12. Verfahren zur Herstellung einer Verbindung, bei der eine Mutter (2) mit einem Bördelkragen (23) versehen wird, in den eine Scheibe (3) eingebracht wird, wobei der Bördelkragen (23) an seiner Innenwandung mit einer Kragenverzahnung (24) versehen wird und die Scheibe (3) mit einer Außenverzahnung (32) versehen wird, welche bei Drehung der Scheibe (3) relativ zum Bördelkragen (23) in nur einer Richtung gegen die Kragenverzahnung (24) sperrt und wobei die Scheibe (3) mit einer Innenverzahnung (31) versehen wird, die mit einer dem Gewinde (13) eines Gewindebolzens (1) vorgelagerten Bolzenverzahnung (14) korrespondiert, und die Mutter (2) mit unverlierbar angeordneter Scheibe (3) auf den Gewindebolzen (1) aufgeschraubt wird, wobei die Innenverzahnung (31) der Scheibe (3) in die Bolzenverzahnung (14) des Gewindebolzens (1) eingreift.

13. Verfahren nach Anspruch 12, **dadurch gekennzeichnet, dass** die Kragenverzahnung (24) des Bördelkragens (23) und/oder die Außenverzahnung (32) der Scheibe (3) derart ausgebildet wird, dass bei Anliegen eines definierten Drehmoments zwischen Scheibe (3) und Bördelkragen (23) eine Beschädigung von Kragenverzahnung (24) und/oder Außenverzahnung (32) eintritt, wodurch die Sperrwirkung der Verzahnung aufgehoben wird, wobei die Einstellung des gewünschten Drehmoments durch Modifikation der Höhe der Zahnflanken und/oder der Dicke der Scheibe erfolgt.

14. Verfahren nach Anspruch 12 oder 13, **dadurch gekennzeichnet, dass** die Außenverzahnung (32) der Scheibe (3) und/oder die Kragenverzahnung (24) des Bördelkragens (23) zumindest eine Folge an Zähnen mit unterschiedlichen Steigungswinkeln aufweist, sodass auch bei kleinsten Drehungen der Scheibe (3) relativ zum Bördelkragen (23) ein Sperren von Zähnen der gegenüberliegenden Verzahnungen (32, 24) einsetzt.

## Claims

1. Connecting device comprising a threaded bolt with a thread and a nut to be screwed onto the thread, where the nut has a flanged collar which receives a washer, **characterised in that** the threaded bolt (1) has a bolt denticulation (14) at its free end preceding the thread (13) into which an interior denticulation (31) on the inside diameter of the washer (3) engages, and that the washer (3) has an exterior denticulation (32) on its outside diameter which engages into a collar denticulation (24) arranged on the inner wall of the flanged collar (23), where the exterior denticulation (32) of the washer (3) interacts with the collar denticulation (24) of the flanged collar (23) in such a way that it is possible to rotate the flanged collar (23) with reference to the washer (3) only in the tensioning direction of the nut (2).

2. Device in accordance with claim 1, **characterised in that** the bolt denticulation (14) is formed by ridges (15) arranged around its circumference.

3. Device in accordance with claim 2, **characterised in that** the ridges (15) have an insertion bevel (16) on their side facing away from the thread (13).

4. Device in accordance with any of the above claims, **characterised in that** the denticulation profile of the exterior denticulation (32) of the washer (3) is serrated in form.

5. Device in accordance with any of the above claims, **characterised in that** the denticulation profile of the collar denticulation (24) is serrated in form.

6. Device in accordance with any of the above claims, **characterised in that** the collar denticulation (24) of the flanged collar (23) and / or the exterior denticulation (32) of the washer (3) are formed in such a way that the denticulation (24, 32) is damaged when a torque greater than 150 kN but preferably greater than 200 kN is exerted, thereby cancelling the locking effect of the denticulation (24, 32).

7. Device in accordance with any of the above claims, **characterised in that** the flanged collar (23) is joined to the nut (2) in such a way that, when a torque greater than 150 kN but preferably greater than 200 kN is exerted on the flanged collar (23) the flanged collar (23) breaks away from the nut (2).

8. Device in accordance with any of the above claims, **characterised in that** the collar denticulation (24) of the flanged collar (23) and / or the exterior denticulation (32) of the washer (3) have at least one arrangement of teeth with different angles of pitch.

9. Device in accordance with any of the above claims, **characterised in that** the interior denticulation (31) of the washer (3) is formed in such a way that when a torque greater than 150 kN, but preferably greater than 200 kN is exerted, the denticulation (31) is damaged, thereby cancelling the locking effect of the denticulation.

10. Device in accordance with claim 9, **characterised in that** the bolt denticulation (14) of the threaded bolt (1) is formed in such a way that when a torque greater than 150 kN, but preferably greater than 200 kN is exerted on the washer (3), the bolt denticulation (14) remains undamaged, even if the interior denticulation (31) of the washer (3) is damaged.

11. Device in accordance with any of the above claims, **characterised in that** the exterior denticulation (32) and / or the interior denticulation (31) of the washer (3) is formed at least partially by teeth angled towards the plane of the washer.

12. Process for making a connection, where a nut (2) is provided with a flanged collar (23) into which a washer (3) is fitted, where the inner wall of the flanged collar (23) is provided with a collar denticulation (24) and the washer (3) is provided with an exterior denticulation (32) which locks the rotation of the washer (3) with reference to the flanged collar (23) in only one direction against the collar denticulation (24), and where the washer (3) is provided with an interior denticulation (31) which corresponds to a bolt denticulation (14) located before the thread (13) of a threaded bolt (1), and the nut (2) with the captive washer (3) is screwed onto the threaded bolt (1), where the interior denticulation (31) of the washer (3) engages the bolt denticulation (14) of the threaded bolt (1).

13. Process in accordance with claim 12 **characterised in that** the collar denticulation (24) of the flanged collar (23) and / or the exterior denticulation (32) of the washer (3) are arranged in such a way that when a certain torque is applied between the washer (3) and the flanged collar (23), the collar denticulation (24) and / or the exterior denticulation (32) is damaged, thereby cancelling the locking effect of the denticulation, where the desired torque is set by varying the height of the tooth flanks and / or the thickness of the washer.

14. Process in accordance with claim 12 or claim 13, **characterised in that** the exterior denticulation (32) of the washer (3) and / or the collar denticulation (24) of the flanged collar (23) has at least one series of teeth with different pitch angles, thereby ensuring that the teeth of the opposing denticulations (32, 24) are locked by even the smallest rotation of the washer (3) with reference to the flanged collar (23).

## Revendications

1. Dispositif de connexion comprenant un goujon fileté et un écrou vissable sur le filetage, sachant que l'écrou présente un collet recevant une rondelle, **caractérisé en ce que** le goujon fileté (1) présente en son extrémité libre, devant le filetage (13), une denture (14) dans laquelle engrène la denture interne (31) agencée sur la circonférence interne de la rondelle (3), et **en ce que** la rondelle (3) présente sur sa circonférence externe une denture externe (32) engrenant dans une denture (24) disposée contre la paroi interne du collet (23), sachant que la denture externe (32) de la rondelle (3) interagit avec la denture (24) du collet (23) de telle manière qu'une rotation du collet (23) relativement à la rondelle (3) n'est possible que dans le sens de serrage de l'écrou (2).

2. Dispositif selon la revendication 1, **caractérisé en ce que** la denture (14) du goujon est formée par des nervures (15) disposées sur la circonférence.

3. Dispositif selon la revendication 2, **caractérisé en ce que** les nervures (15) sont dotées, sur leur côté ne regardant pas le filetage (13), d'un chanfrein (16) facilitant l'engrènement.

4. Dispositif selon l'une des revendications précédentes, **caractérisé en ce que** le profil de la denture externe (32) que comporte-la rondelle (3) est configuré en dents de scie.

5. Dispositif selon l'une des revendications précédentes, **caractérisé en ce que** le profil de la denture (24) est configurée en dents de scie.

6. Dispositif selon l'une des revendications précédentes, **caractérisé en ce que** la denture (24) du collet (23) et/ou la denture externe (32) de la rondelle (3) sont configurées de telle sorte que lorsque s'exerce un couple supérieur à 150 kN, de préférence supérieur à 200 kN, un endommagement de la denture (24, 32) se produit, ce qui supprime l'effet bloquant de la denture (24, 32).

7. Dispositif selon l'une des revendications précédentes, **caractérisé en ce que** le collet (23) est relié à l'écrou (2) de telle manière que lorsque s'exerce sur le collet (23) un couple supérieur à 150 kN, de préférence supérieur à 200 kN, le collet (23) se détache de l'écrou (2).

8. Dispositif selon l'une des revendications précédentes, **caractérisé en ce que** la denture (24) du collet (23) et/ou la denture externe (32) de la rondelle (3) présente(nt) au moins un agencement de dents présentant des inclinaisons de pas différentes.

9. Dispositif selon l'une des revendications précédentes, **caractérisé en ce que** la denture intérieure (31) de la rondelle (3) est configurée de telle sorte que, lorsque s'exerce un couple supérieur à 150 kN, de préférence supérieur à 200 kN, un endommagement de la denture (31) se produit, ce qui supprime l'effet bloquant de la denture.

10. Dispositif selon la revendication 9, **caractérisé en ce que** la denture (14) du goujon fileté (1) est configurée de telle sorte que lorsque s'exerce contre la rondelle (3) un couple supérieur à 150 kN, de préférence supérieur à 200 kN aussi lorsque la denture interne (31) de la rondelle (3) a été endommagée, aucun endommagement de la denture (14) du goujon ne se produit.

11. Dispositif selon l'une des revendications précédentes, **caractérisé en ce que** la denture externe (32) et/ou la denture interne (31) de la rondelle (3) est/sont formée(s) au moins en partie par des dents formant un angle par rapport au plan de la rondelle.

12. Procédé pour fabriquer une connexion dans laquelle un écrou (2) est doté d'un collet (23) dans lequel est introduit une rondelle (3), sachant que le collet (23) est doté d'une denture (24) sur sa paroi interne et que la rondelle (3) est dotée d'une denture externe (32) qui, lorsque la rondelle (3) tourne relativement au collet (23) dans un seul sens, vient se bloquer contre la denture (24) du collet, et sachant que la rondelle (3) est dotée d'une denture interne (31) en correspondance avec la denture (14) située à l'avant du filetage (13) d'un goujon fileté (1), et que l'écrou (2) est vissé sur le goujon fileté (1) avec une rondelle (3) agencée impossible à perdre, sachant que la denture interne (31) de la rondelle (3) engrène dans la denture (14) du goujon fileté (1).

13. Procédé selon la revendication 12, **caractérisé en ce que** la denture (24) du collet (23) et/ou la denture externe (32) de la rondelle (3) est/sont configurée(s) de telle sorte que, lorsqu'un couple défini s'exerce entre la rondelle (3) et le collet (23), un endommagement de la denture (24) du collet et/ou de la denture externe (32) survient, ce qui supprime l'effet de blocage généré par la denture, sachant que le réglage du couple souhaité a lieu en modifiant la hauteur des flancs de dents et/ou l'épaisseur de la rondelle.

14. Procédé selon la revendication 12 ou 13, **caractérisé en ce que** la denture externe (32) de la rondelle (3) et/ou la denture (24) du collet (23) présente(nt) au moins une suite de dents présentant des angles d'inclinaison différents afin que lors de rotations très faibles de la rondelle (3) par rapport au collet (23), un blocage des dents composant les dentures opposées (32, 24) se produise.
